(19) **Europäisches Patentamt**
**European Patent Office**
**Office européen des brevets**

(11) **EP 2 454 298 B1**

(12) **EUROPEAN PATENT SPECIFICATION**

| | |
|---|---|
| (45) Date of publication and mention of the grant of the patent:<br>**15.05.2013 Bulletin 2013/20** | (51) Int Cl.:<br>***C08L 23/10*** (2006.01)  ***C08F 297/08*** (2006.01)<br>***C08F 8/50*** (2006.01)  ***C08L 23/14*** (2006.01) |
| (21) Application number: **10730025.3** | (86) International application number:<br>**PCT/US2010/041031** |
| (22) Date of filing: **06.07.2010** | (87) International publication number:<br>**WO 2011/008589 (20.01.2011 Gazette 2011/03)** |

(54) **POLYPROPYLENE IMPACT COPOLYMERS HAVING HIGH MELT FLOW AND IZOD DUCTILITY**

SCHLAGFESTE POLYPROPYLEN-COPOLYMERE MIT HOHEM SCHMELZFLUSS UND HOHER IZOD-DEHNBARKEIT

COPOLYMÈRES RÉSISTANTS AU CHOC DE POLYPROPYLÈNE AYANT UN INDICE DE FUSION ÉLEVÉ ET UNE DUCTILITÉ IZOD ÉLEVÉE

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR** | (72) Inventor: **ZUM MALLEN, Michael, P.**<br>**Sugar Land**<br>**TX 77479 (US)** |
| (30) Priority: **14.07.2009 US 225417 P** | (74) Representative: **Hayes, Adrian Chetwynd et al**<br>**Boult Wade Tennant**<br>**Verulam Gardens**<br>**70 Gray's Inn Road**<br>**London WC1X 8BT (GB)** |
| (43) Date of publication of application:<br>**23.05.2012 Bulletin 2012/21** | |
| (73) Proprietor: **Dow Global Technologies LLC**<br>**Midland, MI 48674 (US)** | (56) References cited:<br>**US-A1- 2005 107 558    US-A1- 2007 128 388** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to polypropylene impact copolymers having a high melt flow rate and a high impact strength and further relates to methods of making the impact copolymers.

BACKGROUND OF THE INVENTION

There is a continuing need for polypropylene heterophasic copolymers with improved properties, notably materials with high melt flow rates and impact characteristics, especially for automotive thermoplastic olefin (TPO) applications, molding, injection molding, thin wall packaging and engineering applications.

One approach commonly used to achieve polypropylenes with high melt flow rates (MFR) involves chemical treatment, i.e., visbreaking of molten polypropylene heterophasic copolymers. Unfortunately, the resulting visbroken copolymers, also called controlled rheology (CR) polymers, generally need improved impact properties.

BRIEF SUMMARY OF THE INVENTION

One aspect of the invention provides impact copolymers that comprise a continuous phase comprising a propylene-based polymer and a discontinuous rubber phase comprising a propylene/ethylene copolymer. The impact copolymers of this aspect of the invention have an fraction copolymer (Fc, expressed as weight percent (wt. %)) of at least 35, an ethylene content of the rubber fraction (Ec, expressed as weight percent (wt. %)) of at least 38, a melt flow rate of at least 50 g/10 min, and a notched Izod impact strength at 23 °C of at least 615 J/m (11.5 ft-lb/in). In some embodiments, the impact copolymers have a melt flow rate of at least 100 g/10 min. In some embodiments, the impact copolymers have a notched Izod impact strength at 23 °C of at least 630 J/m (11.8 ft-lb/in). In some embodiments the impact copolymers have an Ec of at least 41.

In some embodiments, the impact copolymers are nucleated. While in other embodiments the impact copolymers are non-nucleated. In particular, the impact copolymers can be non-nucleated and have a melt flow rate of at least 100 g/10 min.

In some embodiments, the impact copolymers have a visbreaking ratio of at least 3. This includes embodiments wherein the impact copolymers have a visbreaking ratio of at least 5 and further includes embodiments wherein the impact copolymers have a visbreaking ratio of at least 10. In some embodiments the impact copolymers have a visbreaking ratio in the range of 4 to 15.

In some embodiments, the impact copolymers have a flexural modulus of at least 758 MPa (110,000 psi). This includes embodiments wherein the impact copolymers have a flexural modulus of at least 827 MPa.

In one specific, non-limiting embodiment, the impact copolymer is a nucleated impact copolymer comprising a continuous phase comprising a propylene-based polymer and a discontinuous rubber phase comprising a propylene/ethylene copolymer, wherein the impact copolymer has an Fc of at least 35, an Ec of at least 41, a melt flow rate of at least 55 g/10 min and a notched Izod impact strength at 23 °C of at least 630 J/m (11.8 ft-lb/in). In this embodiment, the nucleated impact copolymer can have a visbreaking ratio of at least 5 and a flexural modulus of at least 882 MPa (128,000 psi). The nucleating agent used to produce this nucleated copolymer can be an organic phosphorous nucleating agent.

In another specific, non-limiting embodiment, the impact copolymer is a non-nucleated copolymer comprising a continuous phase comprising a propylene-based polymer and a discontinuous rubber phase comprising a propylene/ethylene copolymer comprising at least 41 wt.% ethylene, wherein the impact copolymer has an Fc of at least 35, an Ec of at least 41, a melt flow rate of at least 100 g/10 min, and a notched Izod impact strength at 23 °C of at least 615 J/m (11.5 ft-lb/in). In this embodiment, the non-nucleated impact copolymer can have a visbreaking ratio of at least 5 and a flexural modulus of at least 772 MPa (112,000 psi). This includes embodiments wherein the non-nucleated impact copolymer has a visbreaking ratio of at least 10.

Another aspect of the invention provides methods of making impact copolymers. The methods include compounding a polypropylene impact copolymer with a visbreaking agent at a temperature of at least 210 C to provide a visbroken polypropylene impact copolymer having a visbreaking ratio of at least 5. This includes embodiments in which the visbroken polypropylene impact copolymer has a visbreaking ratio of at least 10, and further includes embodiments in which the visbroken polypropylene impact copolymer has a visbreaking ratio in the range of 4 to 15. In some embodiments the compounding takes place at a temperature of at least 215°C. The visbroken polypropylene impact copolymers can be made without nucleating agents. Suitable visbreaking agents include organic peroxides, such as linear peroxides.

DETAILED DESCRIPTION OF THE PREFERRED EMBODIMENT

Unless stated to the contrary, implicit from the context, or customary in the art, all parts and percents are based on weight and all test methods are current as of the filing date of this disclosure.

Numerical ranges include all values from and including the lower and the upper values, in increments of one unit, provided that there is a separation of at least two units between any lower value and any higher value. As an example, if a compositional, physical or other property or process parameter, such as, for example, impact strength, viscosity, melt flow rate, temperature, etc., is from 100 to 1,000, it is intended that all individual values, such as 100, 101, 102, *etc.,* and sub ranges, such as 100 to 144, 155 to 170, 197 to 200, etc., are expressly enumerated. For ranges containing values which are less than one or containing fractional numbers greater than one (e.g., 1.1, 1.5, *etc.),* one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, impact strength, melt flow rate and relative amounts of components in various compositions and blends.

Various properties of the present propylene-based polymers, propylene/ethylene copolymers and impact copolymers are recited and claimed in this application. For the purposes of this disclosure, the standard methods and conditions used to measure these properties are as follows:

(1) Melt Flow Rate (MFR): ASTM D 1238-04, Procedure B, Condition 230 °C/2.16 kg;
(2) Notched Izod Impact Strength: ASTM D 256A at 23 °C using an ASTM D 638 Type I test specimen; and
(3) Flexural Modulus: 1% secant flexural modulus measured according to ASTM D 790A, method I at a testing speed of 1.3 mm/min. using an ASTM D 638 Type I test specimen.
(4) Test specimens: Injection molded according to ASTM D4101.

The term "comprising" and its derivatives are not intended to exclude the presence of any additional component, step or procedure, whether or not the same is specifically disclosed. In order to avoid any doubt, any process or composition claimed through use of the term "comprising" may include any additional steps, equipment, additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

"Composition" and like terms mean a mixture of two or more materials. Included in compositions are pre-reaction, reaction and post-reaction mixtures the latter of which will include reaction products and by-products as well as unreacted components of the reaction mixture and decomposition products, if any, formed from the one or more components of the pre-reaction or reaction mixture.

"Polymer" means a compound prepared by polymerizing monomers, whether of the same or a different type.

"Heterophasic polymers" are multiple phase polymers having a continuous polymer phase (also referred to as the matrix phase) and a discontinuous polymer phase (also referred to as the rubber phase or the elastomeric phase) dispersed within the continuous polymer phase. A heterophasic polymer may contain more than two polymer phases.

The term "propylene-based polymer," as used herein, refers to a polymer that comprises a majority weight percent polymerized propylene monomer (based on the total weight of polymerizable monomers), and optionally may comprise at least one (or more) polymerized comonomer(s), such as ethylene. The propylene-based polymer can be a propylene homopolymer or an interpolymer. A propylene interpolymer means a polymer prepared by the polymerization of propylene with at least one other monomer, such as ethylene.

The term "propylene/ethylene copolymer," as used herein, refers to a polymer that comprises polymer units derived from propylene monomers, polymer units derived from ethylene monomers and, optionally, polymer units derived from at least one other $\alpha$-olefin monomer. In a propylene/ethylene copolymer, either the polymerized propylene monomers or the polymerized ethylene monomers constitute a majority weight percent of the polymer.

A "polypropylene impact copolymer" is a heterophasic copolymer typically having a high impact strength relative to a homopolymer of similar MFR. In a polypropylene impact copolymer, the continuous phase comprises a propylene-based polymer and the discontinuous phase comprises a propylene/ethylene copolymer.

The "fraction of copolymer" or "amount of rubber" of a heterophasic copolymer is the percent weight (wt. %) of the discontinuous phase. This is designated as "Fc." The composition or "ethylene content" of the rubber phase is the percent weight (wt. %) of ethylene in the discontinuous phase. This is designated as "Ec". The weight percent of ethylene based on the total weight of the propylene impact copolymer is designated as "Et." The impact copolymer composition is measured by a Fourier Transformation Infrared (FTIR) procedure which measures the total amount of ethylene in the impact copolymer (Et in wt%) and the amount of ethylene in the rubber fraction (Ec in wt%). The method is used for impact copolymers that have pure propylene homopolymer as the first reactor component and pure EPR as the second reactor component. The amount of rubber fraction (Fc in wt%) follows from the relationship

$$Et = Ec*Fc/100$$

Equivalent values of Et, Ec and Fc can be obtained by combining the amount of rubber fraction with the total ethylene content. As is well known in the art, the amount of rubber can be obtained from a mass balance of the reactors or from measurement of the titanium or magnesium residues from the first and second reactor products employing well known analytical methods. The total ethylene content of the impact copolymer can be measured by a variety of methods which include

1. FTIR by ASTM D 5576-00;
2. $^{13}$C NMR by S. Di Martino and M. Kelchtermans, "Determination of the Composition of Ethylene-Propylene Rubbers Using 13C NMR Spectroscopy", Journal of Applied Polymer Science, Vol. 56, 1781-1787 (1995);
3. J.C. Randall, "A Review of High Resolution Liquid 13C NMR Characterizations of Ethylene-Based Polymers", Journal of Macromolecular Science - Reviews of Macromolecular Chemical Physics, Ch. 29, 201-317 (1989); and
4. The methods detailed in United States Published Patent Application 2004/0215404.

The term $\beta/\alpha$ relates to the ratio of the molecular weight of the copolymer of the discontinuous phase to the molecular weight of the propylene-based polymer of the continuous phase where $\beta$ and $\alpha$ are the values of the intrinsic viscosity of the copolymer and propylene-based polymer fractions, respectively, as measured in decalin at 135 °C (ASTM D 1601). For the purposes of this disclosure, the value of $\beta/\alpha$ is calculated from the MFR of the homopolymer fraction, the MFR of the whole impact copolymer and Fc before visbreaking, as follows:

$$B/\alpha = 1 + \frac{(MFR_{homo} / MFR_{whole})^{0.213} - 1}{Fc}$$

The term "visbreaking ratio" (also referred to as the crack ratio), as used herein, refers to the ratio of the final melt flow rate of a heterophasic copolymer that has undergone visbreaking to the initial melt flow rate of the heterophasic copolymer prior to visbreaking.

The term "nucleating agents," as used herein, refers to substances which, when incorporated into a polymer melt, form nuclei for the growth of polymer crystals in the polymer melt. Examples of nucleating agents for polypropylene include, talc, carboxylate salts (e.g., sodium benzoate), sorbital acetals and organic phosphorous compounds. The term "nucleated polymer," as used herein, refers to a polymer that is polymerized in the presence of a nucleating agent.

One aspect of the invention provides polypropylene impact copolymers characterized by high melt flow rates and high notched Izod impact strengths. The high melt flow rates can be achieved by visbreaking the copolymers with appropriate visbreaking agents in an extrusion reaction at elevated temperatures, as discussed in greater detail below.

In some embodiments, the present impact copolymers are visbroken to achieve melt flow rates at 23 °C, of at least 50 g/10 min. This includes impact copolymers having melt flow rates of at least 60 g/10 min, further includes impact copolymers having melt flow rates of at least 75 g/10 min, still further includes impact copolymers having melt flow rates of at least 90 g/10 min, and yet further includes impact copolymers having melt flow rates of at least 100 g/10 min.

Prior to visbreaking, the impact copolymers ("the starting copolymers") can have relatively low initial melt flow rates. For example, the starting copolymers can have melt flow rates of 20 g/10 min or lower. This includes embodiments where the starting copolymers have melt flow rates of 15 g/10 min or lower, and further includes embodiments where the starting copolymers have melt flow rates at of 10 g/10 min or lower. Thus, the visbreaking ratios for various embodiments of the impact copolymers can be at least 3, at least 5, at least 7, or even at least 10. In some embodiments, the visbreaking ratios for the impact copolymers are no greater than 20. For example, the visbreaking ratio can be in the range of 4 to 15.

At these high melt flow rates, the impact copolymers exhibit high notched Izod impact strengths. In some embodiments, the impact copolymers have sufficiently high impact strengths to render them fully ductile. As used herein, the term "fully ductile" refers to an impact copolymer having a notched Izod impact strength at 23 °C of at least 534 J/m (10 ft-lb/in). For example, some embodiments of the impact copolymers have notched Izod impact strengths at 23 °C of at least 587 J/m (11 ft-lb/in), at least 615 J/m (11.5 ft-lb/in), or at least 635 J/m (11.8 ft-lb/in).

Some embodiments of the impact copolymers also exhibit a high flexural modulus. For example, the impact copolymers can have a flexural modulus of at least 689 MPa (100,000 psi), at least 758 MPa (110,000 psi), at least 772 MPa (112,000 psi), at least 827 MPa (120,000 psi), at least 861 MPa (125,000 psi), or at least 882 MPa (128,000 psi).

Without intending to be bound by any particular theory, the inventors believe that the high impact strengths of the impact copolymers may be due, at least in part, to the promotion of polymer crosslinking relative to degradation in the discontinuous rubber phase of the copolymers during visbreaking. Propylene-based polymer predominantly undergoes chain scission during visbreaking while, in the absence of oxygen, polyethylene undergoes crosslinking. Visbreaking also narrows the molecular weight distribution. The more rapid decrease in molecular weight of the continuous propylene-based polymer phase relative to the dispersed rubber phase results in an increase of $\beta/\alpha$. It is believed that the combination of higher $\beta/\alpha$ and a more narrow propylene-based polymer molecular weight distribution can result in enhanced impact properties.

The impact copolymers are desirably characterized by Fc values of at least 30. This includes embodiments in which the impact copolymers are characterized by Fc values of at least 33 and further includes embodiments in which the impact copolymers are characterized by Fc values of at least 35.

The impact copolymers are desirably characterized by Ec values of at least 38. For example, in some embodiments the impact copolymers have an Ec value of 38 to 45, which promotes ductile failure. The impact copolymers can have a $\beta/\alpha$ ratio before visbreaking of, for example, 1.5 or greater. In some embodiments, the $\beta/\alpha$ ratio is at least 2.

The impact copolymers may, or may not, be nucleated. In some instances, the impact copolymers are produced in the presence of nucleating agents. Where nucleating agents are used, suitable nucleating agents include, talc, carboxylate salts (e.g., sodium benzoate), sorbital acetals and organic phosphates. However, in other embodiments, the impact copolymers are produced in the absence of nucleating agents. Such embodiments are based on the inventors' discovery that the use of nucleating agents can have a significant negative impact on the notched Izod impact strength of the impact copolymers.

The impact copolymers can be produced in a two-stage process that includes a first stage, in which the propylene-based polymer of the continuous polymer phase is prepared, and a second stage, in which the discontinuous rubbery polymer phase is produced in the continuous polymer phase to provide a heterophasic copolymer. The first stage polymerization can be carried out in one or more bulk reactor(s) or in one or more gas phase reactor(s). The second stage polymerization is typically carried out in one or more gas phase reactor(s). The second stage polymerization is typically carried out directly following the first stage polymerization, i.e., the polymerization product recovered from the first polymerization stage is conducted to the first gas phase reactor in the second polymerization stage.

The polymerizations are typically carried out in the presence of a stereoregular olefin polymerization catalyst. Such catalysts are well known. Ziegler Natta and metallocene or single site catalysts are appropriate for polymerizing olefins of three carbons or more. The Ziegler Natta catalysts are preferred. Suitable Ziegler-Natta catalysts are sold by The Dow Chemical Company under the tradename SHAC™ (e.g., SHAC™ 330 Propylene Catalyst).

The present impact copolymers can, optionally, include fillers such as calcium carbonate and kaolin clays. Other additives that can be used in the preparation of (and be present in) the copolymers of this invention, include, but are not limited to, antioxidants, processing aids, pigments, ultraviolet absorbers, flame retardants and lubricants. Suitable pigments include carbon black, titanium dioxide, cadmium-based or other inorganic or organic based pigments. Antioxidants include phenolic and phosphitic antioxidants which can be included to enhance the processing and end use stability of the product. Processing aids include , but are not limited to, low molecular weight polyethylene waxes, ester waxes, paraffin wax, paraffin oils, mineral oils, napthenic oils, bis-stearamides, stearamides, calcium stearate, and stearic acid.

Once formed, the heterophasic impact copolymer is visbroken by adding a visbreaking agent, such as a peroxide, to the copolymer during extrusion to increase its melt flow rate. The visbreaking can be carried out in a pelletizing extruder. Alternatively, the heterophasic copolymer first can be pelletized and visbreaking can be carried out on the pelletized polymer. For example, a solution of peroxide in mineral oil or alcohol can be mixed with the polymer or added to the polymer at the throat of the extruder. The extruder should provide good mixing to ensure dispersion of the rubber phase into a fine rubber particle size. Typical quantities of the peroxide in the visbreaking reaction are from about 200 to about 1000 ppm. Extrusion temperatures will depend, at least in part, on the visbreaking agent employed. Generally, the visbreaking temperature should be sufficiently high to ensure that substantially all the visbreaking agent reacts during the visbreaking process. Typical extruder temperature during visbreaking are at least 210 °C. This includes embodiments where visbreaking is carried out at a melt temperature of at least 215 °C. For example the visbreaking temperature can be from 215 to 250 °C.

The visbreaking of the heterophasic copolymer can be conducted with organic peroxides. The peroxides may be linear or cyclic. The peroxide is desirably characterized in that it undergoes appreciable decomposition beginning at lower melt temperatures during the extrusion reaction. Without intending to be bound by any particular theory of the invention, the inventors believe such peroxides increase the proportion of crosslinking over degradation in the discontinuous rubber phase of the impact copolymers at lower melt temperatures. This may be due to a high, but short-lived, stationary macro radical concentration in the melt arising from rapid peroxide decomposition. This has the effect of minimizing the decrease in the molecular weight of the discontinuous rubber fraction and resulting in an increased overall impact strength of the impact copolymer.

One particularly suitable, commercially available peroxide is 2,5-bis (tert-butylperoxy)-2,5-dimethyl-hexane. Other suitable organic peroxides include those with one hour half lives at temperatures greater than 120 °C. Examples of useful organic peroxides include, but are not limited to, tert-butyl peroxy benzoate (TBPB), dicumyl peroxide, t-butylcumyl peroxide, di-t-butyl peroxide, cumene hydroperoxide, and 2,5-dimethyl-2,5-di-(t-butyl peroxy) hexyne. Additional teachings regarding organic peroxide crosslinking agents are available in the Plastics Additives Handbook, 5th edition, edited by Dr. Hans Zweifel, Hanser Gardner Publications.

SPECIFIC EMBODIMENTS

This example describes methods of making polypropylene impact copolymers in accordance with the present invention, and illustrates the improved impact and flow properties of said impact copolymers.

SHAC™ 320/330 catalyst system available from The Dow Chemical Company is used in the preparation of the impact copolymers of these examples. The system comprises $TiCl_4/MgCl_2$ in combination with an external stereo-control agent (dicyclopentyldimethoxy silane or DCPDMS) and an activator (triethylaluminum).

Six impact copolymers are prepared in a UNIPOL pilot plant gas phase reactor under standard gas phase polymerization conditions. The polymerizations are carried out in two sequential reactors. Homopolymerization of propylene is conducted in the first reactor. Hydrogen is used to obtain the desired MFR value. The catalyst system components are added at a rate to obtain the desired rate of polymerization. DCPDMS is added at a rate to obtain a nominal 1.5% xylene solubles.

The homopolymer powder containing active catalyst residues is intermittently transferred to a depressurization vessel to remove unreacted propylene monomer and other gaseous components. The depressurization vessel is pressurized with nitrogen to convey the homopolymer powder into the second reactor for polymerization with ethylene to make the ethylene-propylene rubber (EPR). Ethylene and propylene monomers are added in a ratio to obtain the desired EPR composition. Hydrogen is also used to obtain the desired MFR value. Impact copolymer powder is intermittently removed from the second reactor for subsequent compounding once the target compositions are obtained and the reactor system is lined out. For each composition, homopolymer reactor powder from the first reaction is collected for subsequent dilution of the impact copolymer composition to obtain samples of lower rubber fraction (Fc).

The impact copolymer composition is measured by a Fourier Transformation Infrared (FTIR) procedure which measures the total amount of ethylene in the impact copolymer (Et in wt%) and the amount of ethylene in the rubber fraction (Ec in wt%). The method is used for impact copolymers that have pure propylene homopolymer as the first reactor component and pure EPR as the second reactor component. The amount of rubber fraction (Fc in wt%) follows from the relationship

$$Et = Ec*Fc/100$$

Equivalent values of Et, Ec and Fc can be obtained by combining the amount of rubber fraction with the total ethylene content. As is well known in the art, the amount of rubber can be obtained from a mass balance of the reactors or from measurement of the titanium or magnesium residues from the first and second reactor products employing well known analytical methods. The total ethylene content of the impact copolymer can be measured by a variety of methods. However, for the purposes of this disclosure, the selected method for measuring total ethylene content will be FTIR by ASTM D 5576-00.

Table 1 reports the impact copolymer base compositions made in the pilot plant and employed in the preparation of the working examples and comparative examples that follow.

Table 1

| Base Compositions from Pilot Plant | | | | |
|---|---|---|---|---|
| Base Composition | Reactor 1 MFR | Reactor 2 MFR | Ec | Fc |
| A | 46 | 10 | 42.4 | 35.2 |
| B | 46 | 10 | 42.8 | 35.2 |
| C | 47 | 10 | 42.2 | 35.6 |
| D | 77 | 20 | 43.0 | 33.2 |
| E | 78 | 20 | 43.4 | 33.5 |

(continued)

| Base Compositions from Pilot Plant | | | | |
|---|---|---|---|---|
| Base Composition | Reactor 1 MFR | Reactor 2 MFR | Ec | Fc |
| F | 78 | 20 | 43.2 | 33.6 |

Additional base compositions for visbreaking were obtained from the base compositions of Table 1 by diluting those compositions with the respective homopolymer to lower the rubber content (Fc). (See Table 3.) The impact copolymer compositions are stabilized with 1,000 parts per million (ppm) Irganox 1010 (tetrakis-(methylene-(3,5-di-(tert)-butyl-4-hydrocinnamate))-methane available from Ciba Specialty Chemicals Corporation), 1,000 ppm Irgafos PEP-Q (tetrakis(2,4-di-tert-butylphenyl)[1,1-biphenyl]-4,4'diylbisphosphonite also available from Ciba Specialty Chemicals Corporation), and 250 ppm DHT-4A (hydrotalcite available from Kyowa Chemical). Some of the base compositions were nucleated with either 1000 ppm NA-11 (methylene bis-(4,6-di-tert-butylphenyl)phosphate sodium salt) available from Amfine Chemical Corporation) or 750 ppm sodium benzoate. The impact copolymer powders with dispersed additives are compounded into pellets on a 30 mm Werner Pfleiderer co-rotating intermeshing twin screw extruder having a length to diameter (L/D) ratio of 24/1. Extrusion conditions are shown in Table 2.

Table 2

| Basestock Compositions Extrusion Conditions | | | | | | | | |
|---|---|---|---|---|---|---|---|---|
| Heater Band Set Points (°C) | | | | | | Backpressure (MPa (psi)) | Screw Speed (rpm) | Melt Temp. (°C) |
| 1 | 2 | 3 | 4 | 5 | 6 | | | |
| 180 | 185 | 190 | 190 | 195 | 195 | 2.52-3.57 (360-510) | 400 | 220-251 |

The resulting base pellets are measured for melt flow according to ASTM D1238. Test specimens for notched Izod impact and flexural modulus are injection molded in accordance with ASTM D4101. Details of the base compositions including impact and stiffness properties are reported in Table 3. Table 3 also indicates whether the copolymers are nucleated.

Table 3

| Base Compositions before Visbreaking | | | | | | | | | | |
|---|---|---|---|---|---|---|---|---|---|---|
| Sample Designation | A-1 | A-2 | B-1 | B-2 | C-1 | C-2 | D-1 | E-1 | F-1 | F-2 |
| Base Composition[1] | A | A | B | B | C | C | D | E | F | F |
| Homopolymer Dilution[2] | none | 77 | none | 80 | none | 28 | none | 52 | none | 50 |
| Nucleation[3] | none | none | NaBz | NaBz | NA-11 | NA-11 | none | NaBz | NA-11 | NA-11 |
| Final MFR | 10 | 19 | 10 | 19 | 10 | 14 | 20 | 34 | 21 | 33 |
| Fc | 35.2 | 19.9 | 35.2 | 19.6 | 35.6 | 27.8 | 33.2 | 22.0 | 32.9 | 22.0 |
| Ec | 42.4 | 42.4 | 42.8 | 42.8 | 42.2 | 42.2 | 43.0 | 43.4 | 43.2 | 43.2 |
| Notched Izod[4] | 732 | 80 | 694 | 91 | 705 | 294 | 107 | 75 | 598 | 75 |

(continued)

| Base Compositions before Visbreaking | | | | | | | | | | |
|---|---|---|---|---|---|---|---|---|---|---|
| Sample Designation | A-1 | A-2 | B-1 | B-2 | C-1 | C-2 | D-1 | E-1 | F-1 | F-2 |
| Flexural Modulus[5] | 940 | 1309 | 976 | 1343 | 1027 | 1212 | 921 | 1367 | 1118 | 1461 |

[1] See Table 1
[2] Parts per hundred dilution with corresponding homopolymer
[3] NaBz = 750 ppm Sodium Benzoate; NA-11 = 1000 ppm Amfine NA-11
[4] Values in J/m
[5] Values in MPa

The working and comparative examples are prepared by visbreaking the base compositions shown in Table 3 with Lupersol 101. To ensure compositional uniformity between the base and visbroken samples, each powder composition shown in Table 3 is blended in sufficient quantity to prepare the non-visbroken compositions and visbroken working and comparative examples. For visbreaking, the peroxide is diluted with acetone and broadly applied to the stabilized reactor powder with a syringe. Following peroxide application, the reactor powder is placed in a polyethylene bag and shaken to obtain a uniform distribution of peroxide and additives. Compounding into pellets is carried out in the 30 mm Werner Pfleiderer co-rotating intermeshing twin screw extruder having a length to diameter (L/D) ratio of 24/1. Table 4 details the compounding conditions.

Table 4

| Extrusion Conditions for Visbreaking | | | | | | | | |
|---|---|---|---|---|---|---|---|---|
| Heater Band Set Points (°C) | | | | | | Backpressure (MPa (psi)) | Screw Speed (rpm) | Melt Temp. (°C) |
| 1 | 2 | 3 | 4 | 5 | 6 | | | |
| 180 | 185 | 190 | 190 | 195 | 195 | 1.4-1-96 (200-280) | 400 | 217-240 |

Values of MFR, impact and stiffness are given in Table 5 for the working and comparative ("comp.") examples. By tracing back the visbroken properties to the base properties it is possible to evaluate the effect of visbreaking on the impact and stiffness properties.

Table 5

| Visbroken Working and Comparative Examples | | | | | | | | |
|---|---|---|---|---|---|---|---|---|
| Example[1] | Base[2] | Nucleation[3] | MFR | VBR[4] | Ec | Fc | Notched Izod at 23 °C | Flexural Modulus |
| | | | | | | | (J/m) | (Mpa) |
| comp-1 | E-1 | NaBz | 111 | 3.3 | 43.4 | 22.0 | 59 | 1317 |
| comp-2 | F-2 | NA-11 | 105 | 3.2 | 43.2 | 22.0 | 59 | 1398 |
| comp-3 | B-2 | NaBz | 92 | 4.9 | 42.8 | 19.6 | 91 | 1324 |
| comp-4 | A-2 | none | 101 | 5.3 | 42.4 | 19.9 | 102 | 1274 |
| | | | | | | | | |
| working-1 | A-1 | none | 107 | 10.7 | 42.4 | 35.2 | 619 | 779 |
| comp-5 | B-1 | NaBz | 92 | 9.2 | 42.8 | 35.2 | 139 | 818 |
| comp-6 | C-1 | NA-11 | 107 | 10.7 | 42.2 | 35.6 | 203 | 852 |
| comp-7 | D-1 | none | 96 | 4.8 | 43.0 | 33.2 | 107 | 898 |

(continued)

| | Visbroken Working and Comparative Examples | | | | | | | |
|---|---|---|---|---|---|---|---|---|
| Example[1] | Base[2] | Nucleation[3] | MFR | VBR[4] | Ec | Fc | Notched Izod at 23 °C | Flexural Modulus |
| | | | | | | | (J/m) | (Mpa) |
| | | | | | | | | |
| working-2 | C-1 | NA-11 | 55 | 5.5 | 42.2 | 35.6 | 636 | 889 |
| comp-8 | F-1 | NA-11 | 69 | 3.3 | 43.2 | 32.9 | 134 | 1073 |
| comp-9 | C-2 | NA-11 | 65 | 4.6 | 42.2 | 27.8 | 166 | 1140 |
| [1] comp = comparative example<br>[2] Composition from Table 3<br>[3] NaBz= 750 ppm Sodium Benzoate; NA-11 = 1000 ppm Amfine NA-11<br>[4] Visbreak ratio | | | | | | | | |

A comparison of the notched Izod impact values for the visbroken comparative examples of Table 5 with the notched Izod impact of the corresponding base compositions of Table 3 reveals a trend toward substantial loss of impact strength for visbroken copolymers made from base copolymers having very high (ductile) impact strengths. In contrast the reduction in impact strength for visbroken copolymers made from base copolymers having relatively low (e.g., < 110 J/m) impact strengths is much less. Notably and unexpectedly, the visbroken working examples defy this trend by maintaining very high post-visbreaking notched Izod impact strengths.

Comparison examples comp-1 to comp-4 demonstrate the effect of VBR on impact strength. These examples have similar rubber contents (Fc) but vary somewhat in VBR and nucleation. All four comparative examples have values of notched Izod impact that would impart a large amount of brittle character in the failure modes of the impact copolymers. As VBR increases the value of notched Izod impact increases. The presence or absence of nucleation has little effect on the notched Izod impact strengths of these copolymers.

Working example 1 exhibits an unexpectedly high value of notched Izod impact strength for a nominal MFR of about 100 when judged against comparative examples comp-5 to comp-7. Comparative examples comp-5 and comp-6 are essentially equivalent to Example 1 in Fc and VBR but have surprisingly lower values of notched Izod impact strength. These two comparative examples show that the presence of nucleation can substantially decrease the post-visbreaking notched Izod impact strength of impact copolymers made from base copolymers characterized by failure modes having a large degree of ductility. Comparison example comp-7 illustrates a large reduction in notched Izod impact strength corresponding to a relatively low VBR coupled with only a modest decrease in Fc relative to working example 1.

Working example 2 illustrates that certain embodiments of the present impact copolymers can achieve a ductile Izod in a nucleated formulation at a high MFR. Comparison example comp-8 shows a substantial loss of impact strength for an impact copolymer having a very modest decrease in Fc but a significant decrease in VBR relative to working example 2. Comparison example comp-9 shows the effect of Fc on notched Izod impact strength.

**Claims**

1.  An impact copolymer comprising:

    (a) a continuous phase comprising a propylene-based polymer; and
    (b) a discontinuous rubber phase comprising a propylene/ethylene copolymer;
    the impact copolymer having an Fc of at least 35, an Ec of at least 38, a melt flow rate of at least 50 g/10 min and a notched Izod impact strength at 23 °C of at least 615 J/m (11.5 ft-lb/in).

2.  The impact copolymer of claim 1, wherein the impact copolymer is non-nucleated.

3.  The impact copolymer of claim 1, further comprising a nucleating agent.

4.  The impact copolymer of claim 6, wherein the nucleating agent is an organic phosphorous nucleating agent.

**5.** The impact copolymer of any of claims 1-4 having a flexural modulus of at least 758 MPa.

**6.** The impact copolymer of any of claims 1-5 further comprising a linear peroxide.

**7.** A method of making an impact copolymer, the method comprising compounding a polypropylene impact copolymer with a visbreaking agent at a temperature of at least 210° C to provide a visbroken polypropylene impact copolymer having a visbreaking ratio of at least 5.

**8.** The method of claim 7, in which the visbroken polypropylene impact copolymer has a visbreaking ratio of at least 10.

**9.** The method of claim 8, in which the visbroken polypropylene impact copolymer is made without a nucleating agent.

**10.** The method of any of claims 7-9, in which the visbreaking agent is a linear peroxide.

**Patentansprüche**

**1.** Ein schlagfestes Copolymer, das Folgendes beinhaltet:

(a) eine zusammenhängende Phase, die ein auf Propylen basierendes Polymer beinhaltet; und
(b) eine dispergierte Kautschukphase, die ein Propylen/Ethylen-Copolymer beinhaltet;
wobei das schlagfeste Copolymer ein Fc von mindestens 35, einen Ec von mindestens 38 und einen Schmelzfließindex von mindestens 50 g/10 min und eine Kerbschlagzähigkeit nach **Izod** bei 23 °C von mindestens 615 J/m (11,5 Fußpfund/Zoll) aufweist.

**2.** Schlagfestes Copolymer gemäß Anspruch 1, wobei das schlagfeste Copolymer nicht keimhaltig ist.

**3.** Schlagfestes Copolymer gemäß Anspruch 1, das ferner einen Keimbildner beinhaltet.

**4.** Schlagfestes Copolymer gemäß Anspruch 6, wobei der Keimbildner ein organischer phosphoriger Keimbildner ist.

**5.** Schlagfestes Copolymer gemäß einem der Ansprüche 1-4, das einen Biegemodul von mindestens 758 MPa aufweist.

**6.** Schlagfestes Copolymer gemäß einem der Ansprüche 1-5, das ferner ein lineares Peroxid beinhaltet.

**7.** Ein Verfahren zum Herstellen eines schlagfesten Copolymers, wobei das Verfahren das Verbinden eines schlagfesten Polypropylencopolymers mit einem Viskositätsbrechungsmittel bei einer Temperatur von mindestens 210 °C zum Bereitstellen eines viskositätsgebrochenen schlagfesten Polypropylencopolymers mit einem Viskositätsbrechungsverhältnis von mindestens 5 beinhaltet.

**8.** Verfahren gemäß Anspruch 7, wobei das viskositätsgebrochene schlagfeste Polypropylencopolymer ein Viskositätsbrechungsverhältnis von mindestens 10 aufweist.

**9.** Verfahren gemäß Anspruch 8, wobei das viskositätsgebrochene schlagfeste Polypropylencopolymer ohne einen Keimbildner hergestellt wird.

**10.** Verfahren gemäß einem der Ansprüche 7-9, wobei das Viskositätsbrechungsmittel ein lineares Peroxid ist.

**Revendications**

**1.** Un copolymère choc comprenant :

(a) une phase continue comprenant un polymère à base de propylène ; et
(b) une phase caoutchouc discontinue comprenant un copolymère de propylène/éthylène ;
le copolymère choc ayant une Fc d'au moins 35, une Ec d'au moins 38, un indice de fluidité à l'état fondu d'au moins 50 g/10 min et une résistance au choc sur barreau entaillé d'après **Izod** à 23 °C d'au moins 615 J/m (11,5 pieds-livres/pouce).

**2.** Le copolymère choc de la revendication 1, le copolymère choc étant non nucléé.

**3.** Le copolymère choc de la revendication 1, comprenant en outre un agent de nucléation.

**4.** Le copolymère choc de la revendication 6, dans lequel l'agent de nucléation est un agent de nucléation phosphoreux organique.

**5.** Le copolymère choc de n'importe lesquelles des revendications 1 à 4 ayant un module de flexion d'au moins 758 MPa.

**6.** Le copolymère choc de n'importe lesquelles des revendications 1 à 5 comprenant en outre un peroxyde linéaire.

**7.** Une méthode pour réaliser un copolymère choc, la méthode comprenant le fait de combiner un copolymère choc de polypropylène avec un agent de viscoréduction à une température d'au moins 210 °C pour fournir un copolymère choc de polypropylène viscoréduit ayant un rapport de viscoréduction d'au moins 5.

**8.** La méthode de la revendication 7, dans laquelle le copolymère choc de polypropylène viscoréduit a un rapport de viscoréduction d'au moins 10.

**9.** La méthode de la revendication 8, dans laquelle le copolymère choc de polypropylène viscoréduit est réalisé sans agent de nucléation.

**10.** La méthode de n'importe lesquelles des revendications 7 à 9, dans laquelle l'agent de viscoréduction est un peroxyde linéaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040215404 A

**Non-patent literature cited in the description**

- **S. DI MARTINO ; M. KELCHTERMANS.** Determination of the Composition of Ethylene-Propylene Rubbers Using C NMR Spectroscopy. *Journal of Applied Polymer Science,* 1995, vol. 56, 1781-1787
- A Review of High Resolution Liquid C NMR Characterizations of Ethylene-Based Polymers. **J.C. RANDALL.** Journal of Macromolecular Science - Reviews of Macromolecular Chemical Physics. 1989, 201-317

- Plastics Additives Handbook. Hanser Gardner Publications